# EUROPEAN PATENT APPLICATION

(11) **EP 4 793 532 A1**
(43) Date of publication of application: **19.08.2026**
(21) Application number: 25789225.7
(22) Date of filing: 25.02.2025
(51) Int. Cl.: F16L 59/02

(54) **CORE MATERIAL FOR VACUUM INSULATION PANEL, AND VACUUM INSULATION PANEL AND MANUFACTURING METHOD THEREFOR AND USE THEREOF**

(30) Priority: 16.04.2024 CN 202410454966; 16.04.2024 CN 202410454973
(71) Applicant: Hefei Hualing Co., Ltd., Hefei, Anhui 230601 (CN); Hefei Midea Refrigerator Co., Ltd., Hefei, Anhui 230088 (CN); Midea Group Co., Ltd., Foshan, Guangdong 528311 (CN)
(72) Inventor: LI, Changxi, Hefei, Anhui 230601 (CN); HAN, Guanghui, Hefei, Anhui 230601 (CN); JU, Jianzhu, Hefei, Anhui 230601 (CN)
(74) Representative: Ran, Handong
(86) International application number: PCT/CN2025/079059
(87) International publication number: WO 2025/218353

(57) **Abstract**

A core material for a vacuum insulation panel, comprising an aramid fiber and a bonding material, wherein the aramid fiber includes at least one of a poly(m-phenylene isophthalamide) fiber, a poly(p-phenylene terephthalamide) fiber, and heterocyclic aramid, and the length of the aramid fiber is 1 mm to 10 mm. A vacuum insulation panel, comprising the core material for a vacuum insulation panel and a barrier film material. A method for preparing the core material for a vacuum insulation panel, comprising: dispersing an aramid fiber and a bonding material into water to obtain a fiber dispersion; and treating the fiber dispersion by means of a wet process and then drying to obtain the core material for a vacuum insulation panel. A core material for a vacuum insulation panel, comprising a fiber non-woven fabric made of the aramid fiber. A vacuum insulation panel, comprising the core material for a vacuum insulation panel and a barrier film material. A method for preparing the core material for a vacuum insulation panel, comprising: dispersing an aramid fiber and a bonding material into water to obtain a fiber dispersion; and treating the fiber dispersion by means of a wet process and then drying to obtain the core material for a vacuum insulation panel. A method for preparing the vacuum insulation panel, comprising: performing heat treatment on the core material for a vacuum insulation panel; and then, encapsulating said core material with the barrier film material, and then vacuumizing to obtain the vacuum insulation panel. A thermal insulation device, comprising the core material for a vacuum insulation panel, or the vacuum insulation panel. By means of the configuration, higher-standard design and energy consumption requirements that are difficult to meet with conventional thermal insulation materials can be achieved.

## Description

### CROSS-REFERENCE TO RELATED APPLICATIONS

This application claims priority to the Chinese Patent Application No. 202410454966.6, filed on April 16, 2024 and entitled "CORE MATERIAL FOR VACUUM INSULATION PANEL, AND VACUUM INSULATION PANEL AND MANUFACTURING METHOD THEREFOR AND USE THEREOF" , and the Chinese Patent Application No. 202410454973.6, filed on April 16, 2024 and entitled "CORE MATERIAL FOR VACUUM INSULATION PANEL, AND VACUUM INSULATION PANEL AND MANUFACTURING METHOD THEREFOR AND USE THEREOF", the entire contents of which are incorporated herein by reference.

### TECHNICAL FIELD

The present disclosure belongs to the technical field of functional materials, and specifically relates to a core material for a vacuum insulation panel and a vacuum insulation panel, and a preparation method and use thereof.

### BACKGROUND

In household appliances with cooling or heating functions (such as refrigerators), thermal insulation materials are typically required. Conventional thermal insulation materials, such as rigid polyurethane foam, are increasingly unable to meet higher standards of design and energy consumption requirements.

Vacuum Insulation Panels (VIPs) offer excellent thermal insulation performance and can partially replace rigid polyurethane foam, thereby reducing energy consumption while increasing usable internal volume. A vacuum insulation panel is generally composed of a core material, a barrier film, a getter, and a desiccant. The core material of the vacuum insulation panel typically includes one or more of the following: powder (such as fumed silica or pyrogenic silica), foam (such as polyurethane foam, polystyrene foam, etc.), inorganic fiber (such as glass fiber), and organic fiber (such as polyester fiber). The core material must possess high porosity, allowing for effective vacuum evacuation, while also maintaining a certain degree of structural strength.

The core material for a vacuum insulation panel prepared using a glass fiber (such as a man-made glass fiber) has several significant drawbacks. First, the production process of the core material using the glass fiber requires cutting, which generates a large amount of glass fiber dust that adheres to skin and mucous membranes, causing severe irritation. Second, the glass fiber industry features high energy consumption and high pollution, and the locations of its manufacturing facilities are strictly restricted.

For vacuum insulation panels using polyurethane foam as the core material, the low open-cell ratio of polyurethane foam and the difficulty in controlling cell size make it challenging to achieve an ideal vacuum level. Furthermore, since the foam forms a continuous structure, contact conduction accounts for a relatively high proportion.

For vacuum insulation panels using powders such as fumed silica as the core material, under low vacuum levels, the powder particles have numerous contact points, resulting in high contact conduction.

Therefore, there remains a need to develop a novel core material for a vacuum insulation panel and a vacuum insulation panel.

### SUMMARY

The present disclosure aims to address at least one of the aforementioned technical problems existing in the related art. To this end, embodiments of the present disclosure provide a core material for a vacuum insulation panel.

An embodiment of the present disclosure provides a vacuum insulation panel.

An embodiment of the present disclosure provides a method for preparing the core material for a vacuum insulation panel, which utilizes a wet process.

An embodiment of the present disclosure provides a method for preparing the vacuum insulation panel, which utilizes a wet process.

An embodiment of the present disclosure provides a thermal insulation device.

An embodiment of a first aspect of the present disclosure provides a core material for a vacuum insulation panel, where the core material includes an aramid fiber and a bonding material, the aramid fiber includes at least one of a poly (m-phenylene isophthalamide) fiber, a poly (p-phenylene terephthalamide) fiber, and a heterocyclic aramid fiber; and the aramid fiber has a length of 1 mm to 10 mm.

According to some embodiments of the present disclosure, the aramid fiber includes the poly (m-phenylene isophthalamide) fiber.

According to some embodiments of the present disclosure, the aramid fiber has a length of 2 mm to 6 mm.

According to some embodiments of the present disclosure, the aramid fiber has a linear density of 0.2 dtex to 5 dtex.

According to some embodiments of the present disclosure, the aramid fiber has a linear density of 0.5 dtex to 3 dtex.

According to some embodiments of the present disclosure, the core material for a vacuum insulation panel has a density of 100 g/cm3 to 300 g/cm3.

According to some embodiments of the present disclosure, the core material for a vacuum insulation panel has a porosity of 60% to 95%.

According to some embodiments of the present disclosure, the bonding material includes at least one of a bonding fiber and a binder.

According to some embodiments of the present disclosure, the bonding fiber includes at least one of a monocomponent polyester fiber, a monocomponent polyethylene fiber, a monocomponent polyvinyl alcohol fiber, a monocomponent polypropylene fiber, a bicomponent sheath-core structure polyester fiber, a bicomponent sheath-core structure polyethylene fiber, a bicomponent polyethylene-polyester fiber, and a bicomponent polypropylene-polyester fiber.

According to some embodiments of the present disclosure, the binder includes at least one of polyacrylate, polyurethane, epoxy resin, and starch hydrogel.

According to some embodiments of the present disclosure, based on a mass of the aramid fiber, a mass fraction of the bonding material is ≤35%.

An embodiment of a second aspect of the present disclosure provides a vacuum insulation panel, which includes the aforementioned core material for a vacuum insulation panel and a barrier film encapsulating the core material.

According to some embodiments of the present disclosure, the vacuum insulation panel further includes at least one of a desiccant and a getter, where the barrier film encapsulates the core material and the at least one of the desiccant and the getter. As an example, the core material is cut to form a groove sized to accommodate the at least one of the desiccant or the getter. The at least one of the desiccant and the getter is placed in the groove, and the core material and the at least one of the desiccant and the getter are encapsulated using the barrier film, followed by evacuation and sealing.

According to some embodiments of the present disclosure, the desiccant includes at least one of calcium carbonate, calcium sulfate, calcium oxide, calcium chloride, magnesium chloride, and barium oxide.

According to some embodiments of the present disclosure, the getter includes at least one of a barium-lithium alloy, a palladium oxide, and an activated carbon.

According to some embodiments of the present disclosure, the vacuum insulation panel has a thickness of at least 8 mm.

According to some embodiments of the present disclosure, the vacuum insulation panel has an internal pressure of 1×10⁻⁴ Pa to 1×10⁻³ Pa.

According to some embodiments of the present disclosure, the vacuum insulation panel has a thermal conductivity of ≤1.30 mW/(m·K).

An embodiment of a third aspect of the present disclosure provides a method for preparing a core material for a vacuum insulation panel, including the following steps:
(1) dispersing an aramid fiber and a bonding material in water to obtain a fiber dispersion;
   and
(2) subjecting the fiber dispersion to wet process treatment, followed by drying to obtain the core material for a vacuum insulation panel.

In conjunction with the third aspect, a method for preparing the aforementioned vacuum insulation panel includes the following steps:
(1) dispersing an aramid fiber and a bonding material in water to obtain a fiber dispersion;
   and
(2) subjecting the fiber dispersion to wet process treatment, followed by drying to obtain the core material; and
(3) subjecting the core material to heat treatment, encapsulating it with a barrier film, followed by evacuation to obtain the vacuum insulation panel.

An embodiment of a fourth aspect of the present disclosure provides another method for preparing a core material for a vacuum insulation panel, including the following steps:
(1) dispersing an aramid fiber in water to obtain a fiber dispersion; and
(2) subjecting the fiber dispersion to wet process treatment, then applying a binder material, followed by drying to obtain the core material.

In conjunction with the fourth aspect, a method for preparing the aforementioned vacuum insulation panel includes the following steps:
(1) dispersing an aramid fiber in water to obtain a fiber dispersion;
(2) subjecting the fiber dispersion to wet process treatment, then applying a binder material, followed by drying to obtain the core material; and
(3) subjecting the core material to heat treatment, encapsulating it with a barrier film, followed by evacuation to obtain the vacuum insulation panel.

An embodiment of a fifth aspect of the present disclosure provides a core material for a vacuum insulation panel, including a fiber nonwoven fabric made of an aramid fiber, where the aramid fiber includes at least one of a poly (m-phenylene isophthalamide) fiber, a poly (p-phenylene terephthalamide) fiber, and a heterocyclic aramid fiber, and has a length of 25 mm to 250 mm.

According to some embodiments of the present disclosure, the aramid fiber has a linear density of 0.5 dtex to 5 dtex.

According to some embodiments of the present disclosure, the core material for a vacuum insulation panel has a density of 100 g/cm³ to 300 g/cm³.

According to some embodiments of the present disclosure, the fiber nonwoven fabric has a basis weight of 10 g/m² to 150 g/m².

An embodiment of a sixth aspect of the present disclosure provides a vacuum insulation panel including the aforementioned core material for a vacuum insulation panel and a barrier film encapsulating the core material.

An embodiment of a sixth aspect of the present disclosure provides a method for preparing a core material for a vacuum insulation panel, including the following steps:
(1) carding an aramid fiber through a carding machine to obtain a fiber web; and
(2) subjecting the fiber web to needle punching process or hydroentangling process to obtain a fiber nonwoven fabric, and stacking the fiber nonwoven fabric to obtain the core material for a vacuum insulation panel.

An embodiment of a seventh aspect of the present disclosure provides a method for preparing a core material for a vacuum insulation panel, including the following steps:
(1) carding an aramid fiber and a bonding fiber through a carding machine to obtain a fiber web; and
(2) subjecting the fiber web to hot-pressing process to obtain a fiber nonwoven fabric, and stacking the fiber nonwoven fabric to obtain the core material for a vacuum insulation panel.

According to some embodiments of the present disclosure, the bonding fiber includes at least one of a monocomponent polyester fiber, a monocomponent polyethylene fiber, a monocomponent polyvinyl alcohol fiber, a monocomponent polypropylene fiber, a bicomponent sheath-core structure polyester fiber, a bicomponent sheath-core structure polyethylene fiber, a bicomponent polyethylene-polyester fiber, and a bicomponent polypropylene-polyester fiber.

According to some embodiments of the present disclosure, a mass ratio of the aramid fiber to the bonding fiber is ≥5:1.

An embodiment of a seventh aspect of the present disclosure provides a method for preparing the aforementioned vacuum insulation panel, including the following steps:
subjecting a core material for a vacuum insulation panel to heat treatment, encapsulating it with a barrier film, followed by evacuation to obtain the vacuum insulation panel.

According to some embodiments of the present disclosure, the heat treatment is carried out at a temperature of 90 °C to 300 °C.

According to some embodiments of the present disclosure, the heat treatment is carried out for a duration of 1 h to 36 h.

An embodiment of an eighth aspect of the present disclosure provides a thermal insulation device including the aforementioned core material for a vacuum insulation panel, or the vacuum insulation panel; and the thermal insulation device includes a refrigerator, an insulated box, a water heater, a microwave oven, a container, and a building wall panel.

### BRIEF DESCRIPTION OF DRAWINGS

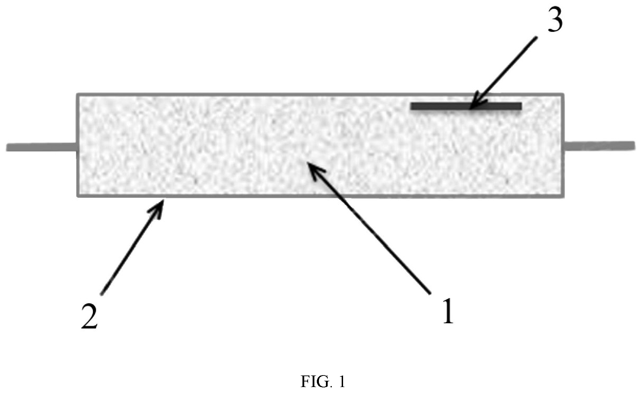

FIG. 1 is a schematic structural diagram of a vacuum insulation panel in the embodiments of the present disclosure.

### Reference numerals:

1: Core material for vacuum insulation panel;
2: Barrier film;
3: Desiccant and getter.

### DETAILED DESCRIPTION

The concept of the present disclosure and the technical effects produced thereby will be described clearly and completely in conjunction with the examples, so as to enable a full understanding of the objectives, features and effects of the present disclosure. Obviously, the described embodiments are only some rather than all of the embodiments of the present disclosure. All other embodiments obtained by those having ordinary skills in the art based on the embodiments of the present disclosure without creative efforts shall fall within the scope of protection of the present disclosure.

It should be understood that in the description of the embodiments of the present disclosure, the term "at least one" means one or more, the term "plurality of" (or a plurality of) means at least two, the term such as "greater than", "less than", "exceeding" or variants thereof prior to a number or series of numbers is understood to not include the number adjacent to the term. The term such as "above," "below," "within," "not more than," "not less than," etc., are understood to include the number adjacent to the term. If used herein, the terms such as "first," "second," and the like are merely used for distinguishing technical features, and are not intended to indicate or imply relative importance, or implicitly point out the number of the indicated technical features, or implicitly point out the precedence order of the indicated technical features.

Unless otherwise defined, all terms (including technical and scientific terms) used herein have the same meaning as commonly understood by those having ordinary skills in the art to which the present disclosure belongs. It is further understood that terms, such as those defined in commonly used dictionaries, should be interpreted as consistent with their meanings in the context of the relevant art and not in an idealized or overly formal sense unless expressly so defined herein.

All methods described herein can be performed in any suitable order unless otherwise indicated herein or otherwise clearly contradicted by context.

The use of any and all examples, or exemplary language (such as "for example") provided herein, is intended merely to better illustrate the present disclosure and does not pose a limitation on the scope of the present disclosure unless otherwise indicated. No language in the specification should be construed as indicating any element as essential to the practice of the present disclosure.

If no specific conditions are indicated in the examples, the conventional conditions or the conditions recommended by the manufacturer shall be followed.

In household appliances with cooling or heating functions (such as refrigerators), thermal insulation materials are generally required. Conventional thermal insulation materials, such as rigid polyurethane foam, have a thermal conductivity of 19 mW/(m·K) to 23 mW/(m·K). However, in the face of increasingly stringent low-energy consumption requirements, existing thermal insulation materials are becoming increasingly difficult to meet higher standards of design and energy consumption requirements.

Vacuum insulation panels (VIPs) offer excellent thermal insulation performance and can partially replace rigid polyurethane foam, thereby reducing energy consumption while increasing usable internal volume.

A vacuum insulation panel is generally composed of a core material, a barrier film, a getter, and a desiccant. The core material, getter, and desiccant are placed in a bag formed from the barrier film, followed by evacuation and heat-sealing to obtain the vacuum insulation panel.

The core material of the vacuum insulation panel typically includes one or more of the following: powder (such as fumed silica or pyrogenic silica), foam (such as polyurethane foam, polystyrene foam, etc.), inorganic fiber (such as glass fiber), and organic fiber (such as polyester fiber). The core material must possess high porosity, allowing for effective vacuum evacuation, while also maintaining a certain degree of structural strength. The barrier film of the vacuum insulation panel mainly includes a polyethylene terephthalate (PET) layer, an aluminum metallized film layer, and a polyethylene (PE) bonding layer. The barrier film can effectively block permeation of some gases and water vapor, but cannot achieve complete isolation. Therefore, the getter and desiccant are typically incorporated to improve the performance and extend the service life of the vacuum insulation panel.

The core material for a vacuum insulation panel prepared using a glass fiber (such as a man-made glass fiber) have high porosity and low thermal conductivity. Additionally, the glass fiber has advantages such as high temperature resistance, fire resistance, and low cost. The glass fiber can well meet the requirements of thermal insulation devices for low energy consumption and high volume, and have currently become the mainstream material in the market.

However, the glass fiber still has significant drawbacks. First, the production process of the core material using the glass fiber requires cutting, which generates a large amount of glass fiber dust that adheres to skin and mucous membranes, causing severe irritation. Second, the glass fiber industry features high energy consumption and high pollution, and the locations of its manufacturing facilities are strictly restricted.

For vacuum insulation panels using polyurethane foam as the core material, the low open-cell ratio of polyurethane foam and the difficulty in controlling cell size make it challenging to achieve an ideal vacuum level. Furthermore, since the foam forms a continuous structure, contact conduction accounts for a relatively high proportion, making it difficult to achieve a thermal conductivity below 6.0 mW/(m·K). Vacuum insulation panels using powder such as the fumed silica as the core material have numerous particle contact points at low vacuum levels, resulting in high contact thermal conduction. Consequently, their thermal conductivity ranges from 4 mW/(m·K) to 6 mW/(m·K), failing to meet the requirements of the thermal insulation devices for large capacity and low energy consumption.

To solve at least one of the above technical problems, some embodiments of the present disclosure provide a core material for a vacuum insulation panel. The core material includes an aramid fiber and a bonding material. The aramid fiber includes at least one of a poly (m-phenylene isophthalamide) fiber, a poly (p-phenylene terephthalamide) fiber, and a heterocyclic aramid fiber, and has a length of 1 mm to 10 mm.

For purposes of illustration and not limitation, the term "aramid fiber" as used herein refers to an aromatic polyamide fiber. The term "poly (m-phenylene isophthalamide) fiber" as used herein may be used interchangeably with "meta-aramid." The term "poly (p-phenylene terephthalamide) fiber" as used herein may be used interchangeably with "para-aramid." The term "heterocyclic aramid" as used herein is formed by copolycondensation of three monomers: p-phenylenediamine, terephthaloyl chloride, and a diamine containing a heterocyclic ring, and may be used interchangeably with "aramid III."

In the core material for a vacuum insulation panel according to embodiments of the present disclosure, voids can be formed between the aramid fiber during the processing, enabling the core material to have high porosity and achieve excellent thermal insulation performance. The aramid fiber having a length of 1 mm to 10 mm according to the present disclosure are lightweight and possess low thermal conductivity, satisfying the requirements of the thermal insulation devices for large capacity and low energy consumption.

In the core material for a vacuum insulation panel according to embodiments of the present disclosure, the aramid fiber used have an intrinsic thermal conductivity of only 130 mW/(m·K), which is one-tenth that of the glass fiber (the glass fiber has an intrinsic thermal conductivity of 800-1500 mW/(m·K)), inherently providing excellent thermal insulation performance.

In the core material for a vacuum insulation panel according to embodiments of the present disclosure, the aramid fiber used has a benzene ring structure containing conjugated double bonds in the main polymer chain, providing higher strength than the glass fiber. When the aramid fiber is formed into a core material, the resulting core material has a structure is similar to that of a glass fiber core material, with point contacts between fibers, greatly reducing contact heat transfer. The air permeability is as high as 6000 to 7000 L/m²/s, providing both high porosity and ease of evacuation for preparation of vacuum insulation panels.

In the core material for a vacuum insulation panel according to embodiments of the present disclosure, the aramid fiber used also possess flexibility, generating no dust or fine fibers during cutting and core material production processes. Thus, the aramid fiber presents no environmental pollution or health risks, thereby complying with regulatory requirements in the European Union and other regions.

In some embodiments of the present disclosure, the aramid fiber includes the poly (m-phenylene isophthalamide) fiber.

In some embodiments of the present disclosure, the aramid fiber consists of the poly (m-phenylene isophthalamide) fiber.

Without wishing to be bound by theory, the applicants have unexpectedly discovered that a core material for a vacuum insulation panel prepared the aramid fiber of a certain specification (particularly the poly (m-phenylene isophthalamide) fiber) exhibits favorable thermal insulation performance, with a thermal conductivity reaching 1.1 mW/(m·K). Among vacuum insulation panels of various materials, the vacuum insulation panel of the present disclosure outperforms those using the glass fiber as the core material.

In some embodiments of the present disclosure, the aramid fiber has a length of 1 mm to 10 mm. Specifically, the aramid fiber may have a length of, for example, 1 mm, 2 mm, 3 mm, 4 mm, 5 mm, 6 mm, 7 mm, 8 mm, 9 mm, or 10 mm.

In some embodiments of the present disclosure, the aramid fiber has a length of 2 mm to 6 mm.

In some embodiments of the present disclosure, the aramid fiber has a length of 3 mm to 5 mm.

In some embodiments of the present disclosure, the aramid fiber has a linear density of 0.2 dtex to 5 dtex. Specifically, the aramid fiber may have a linear density of, for example, 0.2 dtex, 0.3 dtex, 0.4 dtex, 0.5 dtex, 0.6 dtex, 0.7 dtex, 0.8 dtex, 0.9 dtex, 1 dtex, 1.1 dtex, 1.2 dtex, 1.3 dtex, 1.4 dtex, 1.5 dtex, 1.6 dtex, 1.7 dtex, 1.8 dtex, 1.9 dtex, 2 dtex, 2.1 dtex, 2.2 dtex, 2.3 dtex, 2.4 dtex, 2.5 dtex, 2.6 dtex, 2.7 dtex, 2.8 dtex, 2.9 dtex, 3 dtex, 3.1 dtex, 3.2 dtex, 3.3 dtex, 3.4 dtex, 3.5 dtex, 3.6 dtex, 3.7 dtex, 3.8 dtex, 3.9 dtex, 4 dtex, 4.1 dtex, 4.2 dtex, 4.3 dtex, 4.4 dtex, 4.5 dtex, 4.6 dtex, 4.7 dtex, 4.8 dtex, 4.9 dtex, or 5 dtex.

In some embodiments of the present disclosure, the aramid fiber has a linear density of 0.5 dtex to 3 dtex.

In some embodiments of the present disclosure, the aramid fiber has a linear density of 1.5 dtex to 2.5 dtex.

In some embodiments of the present disclosure, the core material for a vacuum insulation panel has a density of 100 g/cm³ to 300 g/cm³. Specifically, the core material for a vacuum insulation panel may have a density of, for example, 100 g/cm³, 110 g/cm³, 120 g/cm³, 130 g/cm³, 140 g/cm³, 150 g/cm³, 160 g/cm³, 170 g/cm³, 180 g/cm³, 190 g/cm³, 200 g/cm³, 210 g/cm³, 220 g/cm³, 230 g/cm³, 240 g/cm³, 250 g/cm³, 260 g/cm³, 270 g/cm³, 280 g/cm³, 290 g/cm³, or 300 g/cm³.

In some embodiments of the present disclosure, the core material for a vacuum insulation panel has a porosity of 60% to 95%. Specifically, the core material for a vacuum insulation panel may have a porosity of, for example, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, or 95%.

In some embodiments of the present disclosure, the core material for a vacuum insulation panel has a porosity of 70% to 90%.

In some embodiments of the present disclosure, the core material for a vacuum insulation panel has a porosity of 80% to 90%.

The core material for a vacuum insulation panel according to embodiments of the present disclosure has high porosity, can be effectively evacuated, and also possesses certain strength, providing excellent thermal insulation performance.

In some embodiments of the present disclosure, the bonding material includes a bonding fiber and/or a binder.

In some embodiments of the present disclosure, the bonding fiber includes at least one of a monocomponent polyester fiber, a monocomponent polyethylene fiber, a monocomponent polyvinyl alcohol fiber, a monocomponent polypropylene fiber, a bicomponent sheath-core structure polyester fiber, a bicomponent sheath-core structure polyethylene fiber, a bicomponent polyethylene-polyester fiber, and a bicomponent polypropylene-polyester fiber. For purposes of illustration and not limitation, the term "bicomponent" as used herein refers to a sheath-core structure in which the sheath and core are different components. For example, both the sheath and core are polyester but with different melting points, and are therefore referred to as bicomponent. As an example, in a bicomponent polyethylene-polyester fiber, the sheath is polyethylene and the core is polyester fiber. As an example, in a bicomponent polypropylene-polyester fiber, the sheath is polypropylene and the core is polyester fiber. As an example, in a bicomponent sheath-core polyester fiber, the sheath and the core are both polyester fibers with different melting points. For example, the melting point of the sheath may be 100 °C to 180 °C, such as 130 °C to 170 °C, for example 100 °C, 120 °C, 150 °C, or 180 °C, and the melting point of the core component is 240 °C to 280 °C, for example 260 °C.

In some embodiments of the present disclosure, the binder includes at least one of polyacrylate (adhesive), polyurethane (adhesive), epoxy resin (adhesive), and starch hydrogel (adhesive).

In some embodiments of the present disclosure, based on a mass of the aramid fiber, a mass fraction of the bonding material is ≤35%. Specifically, based on the mass of the aramid fiber, the mass fraction of the bonding material is, for example, ≤35%, ≤34%, ≤33%, ≤32%, ≤31%, ≤30%, ≤29%, ≤28%, ≤27%, ≤26%, ≤25%, ≤24%, ≤23%, ≤22%, ≤21%, ≤20%, ≤19%, ≤18%, ≤17%, ≤16%, ≤15%, ≤14%, ≤13%, ≤12%, ≤11%, ≤10%, ≤9%, ≤8%, ≤7%, ≤6%, ≤5%, ≤4%, ≤3%, ≤2%, or ≤1%.

As an example, the bonding material is bonding fiber. Based on the mass of the aramid fiber, the mass fraction of the bonding fiber is, for example, ≤35%, ≤34%, ≤33%, ≤32%, ≤31%, ≤30%, ≤29%, ≤28%, ≤27%, ≤26%, ≤25%, ≤24%, ≤23%, ≤22%, ≤21%, ≤20%, ≤19%, ≤18%, ≤17%, ≤16%, ≤15%, ≤14%, ≤13%, ≤12%, ≤11%, ≤10%, ≤9%, ≤8%, ≤7%, ≤6%, ≤5%, ≤4%, ≤3%, ≤2%, or ≤1%.

Alternatively, the bonding material is a binder. Based on the mass of the aramid fiber, the mass fraction of the binder is, for example, ≤10%, ≤9%, ≤8%, ≤7%, ≤6%, ≤5%, ≤4%, ≤3%, ≤2%, or ≤1%.

The bonding material according to the embodiments of the present disclosure can facilitate the handling of the aramid fiber during production and operation, improving production efficiency.

Some embodiments of the present disclosure provide a vacuum insulation panel, which includes the above-described core material for a vacuum insulation panel and a barrier film encapsulating the core material.

The vacuum insulation panel according to the embodiments of the present disclosure may have an ultra-low thermal conductivity of λ = 1.18 mW/(m·K), with performance exceeding that of a vacuum insulation panel using the glass fiber as the core material. Thus, the vacuum insulation panel of the present disclosure has thermal insulation performance superior to that of the vacuum insulation panel based on the glass fiber core, while its core material does not generate pollution during production, making it widely applicable in thermal insulation fields including refrigerators, residential buildings, cold storage facilities, insulated boxes, water heaters, and microwave ovens.

In some embodiments of the present disclosure, the vacuum insulation panel further includes a desiccant and/or a getter. The core material and the desiccant and/or getter are encapsulated using the barrier film.

As an example, the vacuum insulation panel further includes a desiccant, and the core material and the desiccant are encapsulated using the barrier film. As an example, based on each vacuum insulation panel, the amount of the desiccant is 1 g to 10 g, such as 1 g, 2 g, 3 g, 4 g, 5 g, 6 g, 7 g, 8 g, 9 g, or 10 g. As an example, the core material is cut to form a groove sized to accommodate the desiccant. The desiccant is placed in the groove, and the core material and the desiccant are encapsulated using the barrier film, followed by evacuation and sealing.

As an example, the vacuum insulation panel further includes a getter. The barrier film encapsulates the core material and the getter. As an example, based on each vacuum insulation panel, the amount of the getter is 1 g to 10 g, such as 1 g, 2 g, 3 g, 4 g, 5 g, 6 g, 7 g, 8 g, 9 g, or 10 g. As an example, the core material is cut to form a groove sized to accommodate the getter. The getter is placed in the groove, and the core material and the getter are encapsulated using the barrier film, followed by evacuation and sealing.

As an example, the vacuum insulation panel further includes a desiccant and a getter. The barrier film encapsulates the core material, the desiccant, and the getter. As an example, a mass ratio of the desiccant to the getter is (2 to 6):1, such as 2:1, 3:1, 4:1, 5:1, or 6:1. Without wishing to be bound by theory, in some embodiments of the present disclosure, when the barrier film encapsulates the core material, the desiccant, and the getter, the desiccant and the getter may be placed at the same location. As an example, the core material is cut to form a groove sized to accommodate the desiccant and the getter. Both the desiccant and the getter are placed in the groove, and the core material, the desiccant, and the getter are encapsulated using the barrier film, followed by evacuation and sealing.

Referring to FIG. 1, it can be understood that in some embodiments of the present disclosure, the core material 1 and the desiccant and getter 3 are encapsulated using the barrier film 2.

As an example, based on each vacuum insulation panel (having a weight of, for example, about 1 kg to 3 kg, such as 2 kg), the amount of the desiccant is 1 g to 10 g, the amount of the getter is 1 g to 10 g, and the mass ratio of the desiccant to the getter is (2 to 6):1, such as 2:1, 3:1, 4:1, 5:1, or 6:1.

According to the second aspect, in some embodiments of the present disclosure, the desiccant includes at least one of calcium carbonate, calcium sulfate, calcium oxide, calcium chloride, magnesium chloride, and barium oxide. As an example, the desiccant is calcium carbonate.

In some embodiments of the present disclosure, the getter includes at least one of a barium-lithium alloy, a palladium oxide, and an activated carbon. As an example, the getter is barium-lithium alloy.

Generally, evacuating the core material alone cannot completely remove residual gases and moisture therein. The use of the desiccant and/or getter can remove residual gases and moisture from the vacuum insulation panel, and maintain an internal pressure and a gas-free, moisture-free state within the vacuum insulation panel for a considerable period of time.

In some embodiments of the present disclosure, the vacuum insulation panel has a thickness of at least 8 mm, such as 8 mm to 30 mm, or 8 mm to 10 mm. Specifically, the vacuum insulation panel has a thickness of 8 mm, 8.1 mm, 8.2 mm, 8.3 mm, 8.4 mm, 8.5 mm, 8.6 mm, 8.7 mm, 8.8 mm, 8.9 mm, 9 mm, 9.1 mm, 9.2 mm, 9.3 mm, 9.4 mm, 9.5 mm, 9.6 mm, 9.7 mm, 9.8 mm, 9.9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, or even greater thicknesses.

In some embodiments of the present disclosure, the vacuum insulation panel has an internal pressure of 1×10⁻⁴ Pa to 1×10⁻³ Pa. Specifically, the vacuum insulation panel has an internal pressure of 1×10⁻⁴ Pa, 2×10⁻⁴ Pa, 3×10⁻⁴ Pa, 4×10⁻⁴ Pa, 5×10⁻⁴ Pa, 6×10⁻⁴ Pa, 7×10⁻⁴ Pa, 8×10⁻⁴ Pa, 9×10⁻⁴ Pa, or 1×10⁻³ Pa.

In some embodiments of the present disclosure, the vacuum insulation panel has a thermal conductivity of ≤1.30 mW/(m·K). Specifically, the vacuum insulation panel has a thermal conductivity of ≤1.30 mW/(m·K), ≤1.20 mW/(m·K), ≤1.10 mW/(m·K), ≤1.00 mW/(m·K), ≤0.9 mW/(m·K), ≤0.8 mW/(m·K), ≤0.7 mW/(m·K), ≤0.6 mW/(m·K), ≤0.5 mW/(m·K), ≤0.4 mW/(m·K), or ≤0.3 mW/(m·K).

Some embodiments of the present disclosure provide a method for preparing a core material for a vacuum insulation panel, including the following steps:
(1) dispersing an aramid fiber and a bonding material in water to obtain a fiber dispersion;
   and
(2) carrying out sheet forming, followed by drying to obtain the core material. The sheet forming may be performed using a sheet former. The sheet obtained after sheet forming is relatively thin, and a plurality of sheets may be stacked to obtain a core material having a target thickness.

Alternatively, in some embodiments of the present disclosure, a method for preparing a core material for a vacuum insulation panel is provided, including the following steps:
(1) dispersing an aramid fiber in water to obtain a fiber dispersion; and
(2) carrying out sheet forming, then applying a bonding material, followed by drying to obtain the core material. The sheet forming may be performed using a sheet former. The sheet obtained after sheet forming is relatively thin, and a plurality of sheets may be stacked to obtain a core material having a target thickness.

In some embodiments of the present disclosure, the sheet forming may be performed using a sheet former. The sheet former has, for example, a 50-mesh screen of 340 mm × 440 mm.

In some embodiments of the present disclosure, the sheet formed by sheet forming has a basis weight of 15 g/m² to 25 g/m². Specifically, the sheet formed by sheet forming has a basis weight of 15 g/m², 16 g/m², 17 g/m², 18 g/m², 19 g/m², 20 g/m², 21 g/m², 22 g/m², 23 g/m², 24 g/m², or 25 g/m².

In some embodiments of the present disclosure, the sheet formed by sheet forming has a basis weight of 18 g/m² to 21 g/m².

In some embodiments of the present disclosure, the obtained core material for a vacuum insulation panel may be cut into a desired shape and size.

The present disclosure further provides a core material for a vacuum insulation panel prepared by the method for preparing a core material for a vacuum insulation panel.

In the process of preparing the core material for a vacuum insulation panel according to the present disclosure, as well as in the cutting and production processes of the core material, no dust or fine fibers are generated, presenting no environmental pollution or health risks, thus complying with regulatory requirements in the European Union and other regions.

Some embodiments of the present disclosure provide a method for preparing a vacuum insulation panel, including the following step:
subjecting the core material for a vacuum insulation panel to heat treatment, then encapsulating it with a barrier film, followed by evacuation to obtain the vacuum insulation panel.

Specifically, a method for preparing a vacuum insulation panel includes the following steps:
(1) dispersing an aramid fiber and a bonding material in water to obtain a fiber dispersion;
(2) carrying out sheet forming, followed by drying to obtain a core material, where the sheet forming may be performed using a sheet former, the sheet obtained after sheet forming is relatively thin, so that a plurality of sheets may be stacked to obtain a core material having a target thickness, and the obtained core material may be cut into a desired shape and size; and
(3) subjecting the core material to heat treatment, then encapsulating it with a barrier film, followed by evacuation to obtain the vacuum insulation panel. Specifically, the core material may be placed in a bag formed from the barrier film. A vacuum heat sealer may be used to encapsulate and evacuate the bag, and then seal the bag after an internal pressure of the bag reaches a target pressure.

Alternatively, in some embodiments of the present disclosure, a method for preparing a vacuum insulation panel is provided, including the following steps:
(1) dispersing an aramid fiber in water to obtain a fiber dispersion;
(2) carrying out sheet forming, then applying a bonding material, followed by drying to obtain a core material for the vacuum insulation panel, where the sheet forming may be performed using a sheet former, the sheet obtained after sheet forming is relatively thin, so that a plurality of sheets may be stacked to obtain a core material having a target thickness, and the obtained core material may be cut into a desired shape and size; and
(3) subjecting the core material to heat treatment, then encapsulating it with a barrier film, followed by evacuation to obtain the vacuum insulation panel. Specifically, the core material may be placed in a bag formed from the barrier film. A vacuum heat sealer may be used to encapsulate and evacuate the bag, and then seal the bag after an internal pressure of the bag reaches a target pressure.

In the process of preparing the vacuum insulation panel according to the present disclosure, no dust or fine fibers are generated, presenting no environmental pollution or health risks, thus complying with regulatory requirements in the European Union and other regions.

In some embodiments of the present disclosure, the sheet forming may be performed using a sheet former. The sheet former has, for example, a 50-mesh screen of 340 mm × 440 mm.

In some embodiments of the present disclosure, the sheet formed by sheet forming has a basis weight of 15 g/m² to 25 g/m². Specifically, the sheet formed by sheet forming has a basis weight of 15 g/m², 16 g/m², 17 g/m², 18 g/m², 19 g/m², 20 g/m², 21 g/m², 22 g/m², 23 g/m², 24 g/m², or 25 g/m².

In some embodiments of the present disclosure, the sheet formed by sheet forming has a basis weight of 18 g/m² to 21 g/m².

In some embodiments of the present disclosure, the heat treatment is carried out at a temperature of 90 °C to 300 °C. Specifically, the heat treatment is carried out at a temperature of 90 °C, 100 °C, 110 °C, 120 °C, 130 °C, 140 °C, 150 °C, 160 °C, 170 °C, 180 °C, 190 °C, 200 °C, 210 °C, 220 °C, 230 °C, 240 °C, 250 °C, 260 °C, 270 °C, 280 °C, 290 °C, or 300 °C.

In some embodiments of the present disclosure, the heat treatment is carried out at a temperature of 120 °C to 250 °C.

In some embodiments of the present disclosure, the heat treatment is carried out at a temperature of 150 °C to 230 °C.

In some embodiments of the present disclosure, the heat treatment is carried out for 1 h to 36 h. Specifically, the heat treatment is carried out for 1 h, 2 h, 3 h, 4 h, 5 h, 6 h, 7 h, 8 h, 9 h, 10 h, 11 h, 12 h, 13 h, 14 h, 15 h, 16 h, 17 h, 18 h, 19 h, 20 h, 21 h, 22 h, 23 h, 24 h, 25 h, 26 h, 27 h, 28 h, 29 h, 30 h, 31 h, 32 h, 33 h, 34 h, 35 h, or 36 h.

In some embodiments of the present disclosure, the heat treatment is carried out for 1.5 h to 12 h.

In some embodiments of the present disclosure, the heat treatment is carried out for 1.5 h to 8 h.

As an example, the heat treatment is carried out at a temperature of 90 °C to 300 °C for 1 h to 36 h. As an example, the heat treatment is carried out at a temperature of 120 °C to 250 °C for 1.5 h to 12 h. As an example, the heat treatment is carried out at a temperature of 150 °C to 230 °C for 1.5 h to 8 h.

The present disclosure uses the aramid fiber of specific specifications in combination with a wet process to obtain a core material for a vacuum insulation panel and a vacuum insulation panel having superior thermal conductivity, light weight, excellent thermal insulation performance, and safety without pollution. The aramid fiber has a length of 1 mm to 10 mm. For purposes of illustration and not limitation, aramid fibers that are too short cannot be used for sheet forming, while those that are too long result in poor dispersion, both of which are unsuitable for the wet process of the present disclosure.

The present disclosure further provides a vacuum insulation panel prepared by the method for preparing a vacuum insulation panel.

Some embodiments of the present disclosure provide a thermal insulation device, including the above-described core material for a vacuum insulation panel or the above-described vacuum insulation panel.

In some embodiments of the present disclosure, the thermal insulation device is a refrigerator. When the above-described core material for a vacuum insulation panel or the above-described vacuum insulation panel is used in a thermal insulation component of the refrigerator, a thermal insulation effect can be achieved.

In some embodiments of the present disclosure, the thermal insulation device is an insulated box. When the above-described core material for a vacuum insulation panel or the above-described vacuum insulation panel is used in a thermal insulation component of the insulated box, a thermal insulation effect can be achieved.

In some embodiments of the present disclosure, the thermal insulation device is a water heater. When the above-described core material for a vacuum insulation panel or the above-described vacuum insulation panel is used in a thermal insulation component of the water heater, a thermal insulation effect can be achieved.

In some embodiments of the present disclosure, the thermal insulation device is a microwave oven. When the above-described core material for a vacuum insulation panel or the above-described vacuum insulation panel is used in a thermal insulation component of the microwave oven, a thermal insulation effect can be achieved.

In some embodiments of the present disclosure, the thermal insulation device is a shipping container. When the above-described core material for a vacuum insulation panel or the above-described vacuum insulation panel is used in a thermal insulation component of the shipping container (such as a refrigerated container or a cold chain transport container), a thermal insulation effect can be achieved.

In some embodiments of the present disclosure, the thermal insulation device is a building wall panel. When the above-described core material for a vacuum insulation panel or the above-described vacuum insulation panel is used in a thermal insulation component of the building wall panel (such as a residential building or residential wall), a thermal insulation effect can be achieved.

In some embodiments of the present disclosure, the thermal insulation device is a cold storage facility. When the above-described core material for a vacuum insulation panel or the above-described vacuum insulation panel is used in a thermal insulation component of the cold storage facility, a thermal insulation effect can be achieved.

The thermal insulation device according to embodiments of the present disclosure exhibits a low thermal conductivity and possesses superior thermal insulation performance. No dust or fine fibers are generated during production, presenting no environmental pollution or health risks, thus complying with regulatory requirements in the European Union and other regions.

It can be understood that the vacuum insulation panel according to embodiments of the present disclosure uses the aramid fiber of specific specifications, having high porosity, excellent thermal conductivity, and light weight, thereby providing excellent thermal insulation performance. In the process of preparing the vacuum insulation panel according to the present disclosure, as well as in the cutting and production processes of the core material for a vacuum insulation panel, no dust or fine fibers are generated, presenting no environmental pollution or health risks.

Specific examples are described below to enable a better understanding of the technical schemes of the present disclosure.

### Example 1

A core material for a vacuum insulation panel and a vacuum insulation panel were prepared in this Example.

The core material for a vacuum insulation panel was prepared using a poly (m-phenylene isophthalamide) fiber by a wet process, and then the core material was used to prepare the vacuum insulation panel.

A specific preparation method was as follows:
(1) poly (m-phenylene isophthalamide) fiber with a linear density of 2.0 dtex and a length of 6 mm and a bicomponent sheath-core structure polyester fiber with a linear density of 2.2 dtex (the sheath had a melting point of 150 °C, and the core had a melting point of 260 °C, commercially available) were mixed uniformly in a mass ratio of 100:7.5 to obtain mixed fibers, which were dispersed in 300 L of water in batches, and uniformly dispersed to obtain a fiber dispersion (with a slurry concentration of 0.08%);
(2) sheet forming was performed with a 50-mesh screen of 340 mm × 440 mm, where an appropriate amount of the mixed fibers was added upon obtaining every two sheets to maintain the concentration in water substantially unchanged, then the sheets were filtered to remove moisture and oven-dried to a moisture content of 80%, after that the sheets were manually detached from the screen to obtain single sheets, and a plurality of sheets were stacked to obtain a core material for a vacuum insulation panel; and
(3) the core material was placed in an oven at 160 °C and dried for 6 h, then the temperature of the oven was adjusted to 210 °C for drying for 3 h, after which the dried core material was placed in a bag formed from a barrier film together with a getter (1 g) and a desiccant (4 g), and then the bag was placed in a vacuum sealer to be evacuated and sealed, to obtain a vacuum insulation panel with a thickness of 9 mm.

### Example 2

A core material for a vacuum insulation panel and a vacuum insulation panel were prepared in this Example.

The core material for a vacuum insulation panel was prepared using a poly (m-phenylene isophthalamide) fiber by a wet process, and then the core material was used to prepare the vacuum insulation panel.

A specific preparation method was as follows:
(1) poly (m-phenylene isophthalamide) fiber with a linear density of 2.5 dtex and a length of 9 mm and a bicomponent sheath-core structure polyester fiber with a linear density of 2.2 dtex (the sheath had a melting point of 150 °C, and the core had a melting point of 260 °C, commercially available) were mixed uniformly in a mass ratio of 100:15 to obtain mixed fibers, which were dispersed in 300 L of water in batches, and uniformly dispersed to obtain a fiber dispersion (with a slurry concentration of 0.08%);
(2) Sheet forming was performed with a 50-mesh screen of 340 mm × 440 mm, where an appropriate amount of the mixed fibers was added upon obtaining every two sheets to maintain the concentration in water substantially unchanged, then the sheets were filtered to remove moisture and oven-dried to a moisture content of about 80%, after that the sheets were manually detached from the screen to obtain single sheets, and a plurality of sheets were stacked to obtain a core material for a vacuum insulation panel; and
(3) the core material was placed in an oven at 170 °C and dried for 2.5 h, then the temperature of the oven was adjusted to 200 °C for drying for 3.5 h, after which the dried core material was placed in a bag formed from a barrier film together with a getter and a desiccant, and then the bag was placed in a vacuum sealer to be evacuated and sealed, to obtain a vacuum insulation panel with a thickness of 9 mm.

### Example 3

A core material for a vacuum insulation panel and a vacuum insulation panel were prepared in this Example.

The core material for a vacuum insulation panel was prepared using a poly (m-phenylene isophthalamide) fiber by a wet process, and then the core material was used to prepare the vacuum insulation panel.

A specific preparation method was as follows:
(1) poly (m-phenylene isophthalamide) fiber with a linear density of 1.5 dtex and a length of 3 mm and a bicomponent sheath-core structure polyester fiber with a linear density of 2.2 dtex (the sheath had a melting point of 150 °C, and the core had a melting point of 260 °C, commercially available) were mixed uniformly in a mass ratio of 100:20 to obtain mixed fibers, which were dispersed in 300 L of water in batches, and uniformly dispersed to obtain a fiber dispersion (with a slurry concentration of 0.08%);
(2) sheet forming was performed with a 50-mesh screen of 340 mm × 440 mm, where an appropriate amount of the mixed fibers was added upon obtaining every two sheets to maintain the concentration in water substantially unchanged, then the sheets were filtered to remove moisture and oven-dried to a moisture content of about 80%, after that the sheets were manually detached from the screen to obtain single sheets, and a plurality of sheets were stacked to obtain a core material for a vacuum insulation panel; and
(3) the core material for a vacuum insulation panel was placed in an oven at 150 °C and dried for 8 h, then the temperature of the oven was adjusted to 200 °C for drying for 2 h, after which the dried core material was placed in a bag formed from a barrier film a getter (1.2 g) and a desiccant (4 g), and then the bag was placed in a vacuum sealer to be evacuated and sealed, to obtain a vacuum insulation panel with a thickness of 9 mm.

### Example 4

A core material for a vacuum insulation panel and a vacuum insulation panel were prepared in this Example.

The core material for a vacuum insulation panel was prepared using a poly (m-phenylene isophthalamide) fiber by a wet process, and then the core material was used to prepare the vacuum insulation panel.

A specific preparation method was as follows:
(1) poly (m-phenylene isophthalamide) fiber with a linear density of 4.0 dtex and a length of 9 mm and a bicomponent sheath-core structure polyester fiber with a linear density of 2.2 dtex (the sheath had a melting point of 150 °C, and the core had a melting point of 260 °C, commercially available) were mixed uniformly in a mass ratio of 100:7.5 to obtain mixed fibers, which were dispersed in 300 L of water in batches, and uniformly dispersed to obtain a fiber dispersion (with a slurry concentration of 0.08%);
(2) sheet forming was performed with a 50-mesh screen of 340 mm × 440 mm, where an appropriate amount of the mixed fibers was added upon obtaining every two sheets to maintain the concentration in water substantially unchanged, then the sheets were filtered to remove moisture and oven-dried to a moisture content of about 80%, after that the sheets were manually detached from the screen to obtain single sheets, and a plurality of sheets were stacked to obtain a core material for a vacuum insulation panel;
(3) the core material was placed in an oven at 180 °C and dried for 6 h, after which the dried core material was placed in a bag formed from a barrier film together with a getter (1.5 g) and a desiccant (5 g), and then the bag was placed in a vacuum sealer to be evacuated and sealed, to obtain a vacuum insulation panel with a thickness of 9 mm.

### Example 5

A core material for a vacuum insulation panel and a vacuum insulation panel were prepared in this Example.

The core material was prepared using a poly (m-phenylene isophthalamide) fiber by a wet process, and then the core material was used to prepare the vacuum insulation panel.

A specific preparation method was as follows:
(1) poly (m-phenylene isophthalamide) fiber with a linear density of 2.0 dtex and a length of 6 mm dispersed in 300 L of water to obtain a fiber dispersion (with a slurry concentration of 0.08%);
(2) sheet forming was performed with a 50-mesh screen of 340 mm × 440 mm, where an appropriate amount of the poly (m-phenylene isophthalamide) fiber was added upon obtaining every two sheets to maintain its concentration in water substantially unchanged, then the sheets were filtered to remove moisture and oven-dried to a moisture content of 80%, followed by spraying polyacrylate accounting for 1% of the mass of the poly (m-phenylene isophthalamide) fiber thereon, after which the sheets were manually detached from the screen to obtain single sheets, and were stacked sequentially to obtain a core material for a vacuum insulation panel; and
(3) the core material was placed in an oven at 210 °C and dried for 2.5 h, after which it was placed in a bag formed from a barrier film together with a getter (0.8 g) and a desiccant (5 g), and then the bag was placed in a vacuum sealer to be evacuated and sealed, to obtain a vacuum insulation panel with a thickness of 9 mm.

### Example 6

A core material for a vacuum insulation panel and a vacuum insulation panel were prepared in this Example.

The core material for a vacuum insulation panel was prepared using heterocyclic aramid fiber by a wet process, and then the core material was used to prepare the vacuum insulation panel.

A specific preparation method was as follows:
(1) heterocyclic aramid fiber with a linear density of 2.2 dtex and a length of 6 mm was dispersed in 300 L of water to obtain a fiber dispersion (with a slurry concentration of 0.08%);
(2) sheet forming was performed with a 50-mesh screen of 340 mm × 440 mm, where an appropriate amount of the heterocyclic aramid fiber was added upon obtaining every two sheets to maintain its concentration in water substantially unchanged, then the sheets were filtered to remove moisture and oven-dried to a moisture content of 80%, followed by spraying epoxy resin accounting for 3% of the mass of the heterocyclic aramid fiber thereon, after which the sheets were manually detached from the screen to obtain single sheets, and were stacked sequentially to obtain a core material for a vacuum insulation panel; and
(3) the core material was placed in an oven at 210 °C and dried for 2.5 h, after which it was placed in a bag formed from a barrier film together with a getter (1 g) and a desiccant (4 g), and then the bag was placed in a vacuum sealer to be evacuated and sealed, to obtain a vacuum insulation panel with a thickness of 9 mm.

### Comparative Example 1

A commercially available glass fiber core material with a thickness of 9 mm specialized for vacuum insulation panels was used to prepare a vacuum insulation panel in this Comparative Example. The preparation method was basically the same as step (3) of Example 5, the details were as follows:
the glass fiber core material of 9 mm was placed in an oven at 210 °C and dried for 2.5 h, after which it was placed in a bag formed from a barrier film together with a getter (0.8 g) and a desiccant (5 g), and then the bag was placed in a vacuum sealer to be evacuated and sealed, to obtain a vacuum insulation panel.

### Comparative Example 2

The poly (m-phenylene isophthalamide) fiber: bicomponent sheath-core structure polyester fiber=100:35 (in mass ratio) was used in this Comparative Example, and the rest of the process was the same as Example 1.

The performances of the products prepared in the Examples and Comparative Examples are shown in Table 1 below.

**Table 1**

| | Comparative Example 1 | Comparrative Example 2 | Example 1 | Example 2 | Example 3 | Example 4 | Example 5 | Example 6 |
|---|---|---|---|---|---|---|---|---|
| Density of core material, g/cm³ | 320 | 240 | 225 | 228 | 237 | 225 | 220 | 225 |
| Porosity | 90 | 83.5 | 84.7 | 84.5 | 84 | 84.9 | 85 | 84.5 |
| Basis weight of sheet, g/m² | / | 19.5 | 19.2 | 19.87 | 20.1 | 19.5 | 18.89 | 21 |
| Thickness of vacuum insulation panel, mm | 9 | 9 | 9 | 9 | 9 | 9 | 9 | 9 |
| Thermal conductivity of vacuum insulation panel, mW/(m·K) | 1.46 | 1.55 | 1.24 | 1.32 | 1.35 | 1.28 | 1.18 | 1.25 |

The thermal conductivity was measured using a steady-state heat flux method according to the national standard GB/T 10294/10295.

It can be seen from Table 1 that the vacuum insulation panels prepared by the Examples of the present disclosure have better thermal conductivity. Under the same conditions, the thermal conductivity of the vacuum insulation panel prepared using glass fiber is significantly inferior to that of the present disclosure.

In addition, experiments have shown that if the poly (m-phenylene isophthalamide) fiber with a length of 0.5 mm is used, it will be not possible to conduct sheet forming. In addition, excessively long aramid fiber results in poor dispersion and is therefore not suitable for the wet process of the present disclosure.

In addition, experiments have shown that in the process of preparing the vacuum insulation panels, if neither a bonding fiber nor a binder is added, although the thermal conductivity is low and optimal results are obtained, the operability of the production process is compromised, leading to reduced production efficiency.

In some embodiments of the present disclosure, a core material for a vacuum insulation panel is provided, including a fiber nonwoven fabric made of an aramid fiber, where the aramid fiber includes at least one of a poly (m-phenylene isophthalamide) fiber, a poly (p-phenylene terephthalamide) fiber, and a heterocyclic aramid fiber, and has a length of 25 mm to 250 mm.

In some embodiments of the present disclosure, the aramid fiber includes the poly (m-phenylene isophthalamide) fiber.

In some embodiments of the present disclosure, the aramid fiber consists of the poly (m-phenylene isophthalamide) fiber.

Without wishing to be bound by theory, the applicants have unexpectedly discovered that a core material for a vacuum insulation panel prepared the aramid fiber of a certain specification (particularly the poly (m-phenylene isophthalamide) fiber) exhibits favorable thermal insulation performance. Among vacuum insulation panels of various materials, the vacuum insulation panel of the present disclosure outperforms those using the glass fiber as the core material.

In some embodiments of the present disclosure, the aramid fiber has a length of 25 mm to 250 mm. Specifically, the aramid fiber may have a length of, for example, 25 mm, 26 mm, 27 mm, 28 mm, 29 mm, 30 mm, 31 mm, 32 mm, 33 mm, 34 mm, 35 mm, 36 mm, 37 mm, 38 mm, 39 mm, 40 mm, 50 mm, 60 mm, 61 mm, 62 mm, 63 mm, 64 mm, 65 mm, 66 mm, 67 mm, 68 mm, 69 mm, 70 mm, 71 mm, 72 mm, 73 mm, 74 mm, 75 mm, 76 mm, 77 mm, 78 mm, 79 mm, 80 mm, 81 mm, 82 mm, 83 mm, 84 mm, 85 mm, 86 mm, 87 mm, 88 mm, 89 mm, 90 mm, 91 mm, 92 mm, 93 mm, 94 mm, 95 mm, 100 mm, 110 mm, 120 mm, 130 mm, 140 mm, 150 mm, 160 mm, 170 mm, 180 mm, 190 mm, 200 mm, 210 mm, 220 mm, 230 mm, 240 mm, or 250 mm.

In some embodiments of the present disclosure, the aramid fiber has a length of 25 mm to 150 mm.

In some embodiments of the present disclosure, the aramid fiber has a length of 38 mm to 100 mm.

In some embodiments of the present disclosure, the aramid fiber has a linear density of 0.5 dtex to 5 dtex. Specifically, the aramid fiber may have a linear density of, for example, 0.5 dtex, 0.6 dtex, 0.7 dtex, 0.8 dtex, 0.9 dtex, 1 dtex, 1.1 dtex, 1.2 dtex, 1.3 dtex, 1.4 dtex, 1.5 dtex, 1.6 dtex, 1.7 dtex, 1.8 dtex, 1.9 dtex, 2 dtex, 2.1 dtex, 2.2 dtex, 2.3 dtex, 2.4 dtex, 2.5 dtex, 2.6 dtex, 2.7 dtex, 2.8 dtex, 2.9 dtex, 3 dtex, 3.1 dtex, 3.2 dtex, 3.3 dtex, 3.4 dtex, 3.5 dtex, 3.6 dtex, 3.7 dtex, 3.8 dtex, 3.9 dtex, 4 dtex, 4.1 dtex, 4.2 dtex, 4.3 dtex, 4.4 dtex, 4.5 dtex, 4.6 dtex, 4.7 dtex, 4.8 dtex, 4.9 dtex, or 5 dtex.

In some embodiments of the present disclosure, the aramid fiber has a linear density of 1 dtex to 3 dtex.

In some embodiments of the present disclosure, the aramid fiber has a linear density of 1.5 dtex to 2.5 dtex.

In some embodiments of the present disclosure, the core material for a vacuum insulation panel has a density of 100 g/cm³ to 300 g/cm³. Specifically, the core material for a vacuum insulation panel may have a density of, for example, 100 g/cm³, 110 g/cm³, 120 g/cm³, 130 g/cm³, 140 g/cm³, 150 g/cm³, 160 g/cm³, 170 g/cm³, 180 g/cm³, 190 g/cm³, 200 g/cm³, 210 g/cm³, 220 g/cm³, 230 g/cm³, 240 g/cm³, 250 g/cm³, 260 g/cm³, 270 g/cm³, 280 g/cm³, 290 g/cm³, or 300 g/cm³.

In some embodiments of the present disclosure, the core material for a vacuum insulation panel has a porosity of 75% to 95%. Specifically, the core material for a vacuum insulation panel may have a porosity of, for example, 75%, 76%, 77%, 78%, 79%, 80%, 81%, 82%, 83%, 84%, 85%, 86%, 87%, 88%, 89%, 90%, 91%, 92%, 93%, 94%, or 95%.

In some embodiments of the present disclosure, the core material for a vacuum insulation panel has a porosity of 80% to 90%.

In some embodiments of the present disclosure, the core material for a vacuum insulation panel has a porosity of 84% to 90%.

In some embodiments of the present disclosure, the fiber nonwoven fabric has a basis weight of 10 g/m² to 150 g/m². Specifically, the fiber nonwoven fabric may have a basis weight of, for example, 10 g/m², 11 g/m², 12 g/m², 13 g/m², 14 g/m², 15 g/m², 16 g/m², 17 g/m², 18 g/m², 19 g/m², 20 g/m², 21 g/m², 22 g/m², 23 g/m², 24 g/m², 25 g/m², 26 g/m², 27 g/m², 28 g/m², 29 g/m², 30 g/m², 31 g/m², 32 g/m², 33 g/m², 34 g/m², 35 g/m², 36 g/m², 37 g/m², 38 g/m², 39 g/m², 40 g/m², 50 g/m², 60 g/m², 61 g/m², 62 g/m², 63 g/m², 64 g/m², 65 g/m², 66 g/m², 67 g/m², 68 g/m², 69 g/m², 70 g/m², 71 g/m², 72 g/m², 73 g/m², 74 g/m², 75 g/m², 76 g/m², 77 g/m², 78 g/m², 79 g/m², 80 g/m², 81 g/m², 82 g/m², 83 g/m², 84 g/m², 85 g/m², 86 g/m², 87 g/m², 88 g/m², 89 g/m², 90 g/m², 91 g/m², 92 g/m², 93 g/m², 94 g/m², 95 g/m², 100 g/m², 110 g/m², 120 g/m², 130 g/m², 140 g/m², or 150 g/m².

In some embodiments of the present disclosure, the fiber nonwoven fabric has a basis weight of 10 g/m² to 100 g/m².

In some embodiments of the present disclosure, the fiber nonwoven fabric has a basis weight of 10 g/m² to 60 g/m².

In some embodiments of the present disclosure, a vacuum insulation panel is provided, including the above-described core material for a vacuum insulation panel and a barrier film encapsulating the core material.

In some embodiments of the present disclosure, the vacuum insulation panel further includes a desiccant and/or a getter. The barrier film encapsulates the core material and the desiccant and/or getter. The descriptions of the desiccant and the getter may be found in the previous embodiments and are not repeated herein.

In some embodiments of the present disclosure, the vacuum insulation panel has a thickness of at least 8 mm, such as 8 mm to 30 mm, or 8 mm to 10 mm. Specifically, the vacuum insulation panel has a thickness of 8 mm, 8.1 mm, 8.2 mm, 8.3 mm, 8.4 mm, 8.5 mm, 8.6 mm, 8.7 mm, 8.8 mm, 8.9 mm, 9 mm, 9.1 mm, 9.2 mm, 9.3 mm, 9.4 mm, 9.5 mm, 9.6 mm, 9.7 mm, 9.8 mm, 9.9 mm, 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, or even greater thicknesses.

In some embodiments of the present disclosure, the vacuum insulation panel has an internal pressure of 1×10⁻⁴ Pa to 1×10⁻³ Pa. Specifically, the vacuum insulation panel has an internal pressure of 1×10⁻⁴ Pa, 2×10⁻⁴ Pa, 3×10⁻⁴ Pa, 4×10⁻⁴ Pa, 5×10⁻⁴ Pa, 6×10⁻⁴ Pa, 7×10⁻⁴ Pa, 8×10⁻⁴ Pa, 9×10⁻⁴ Pa, or 1×10⁻³ Pa.

In some embodiments of the present disclosure, the vacuum insulation panel has a thermal conductivity of ≤1.50 mW/(m·K). Specifically, the vacuum insulation panel has a thermal conductivity of ≤1.50 mW/(m·K), ≤1.40 mW/(m·K), ≤1.30 mW/(m·K), ≤1.20 mW/(m·K), ≤1.10 mW/(m·K), ≤1.00 mW/(m·K), ≤0.9 mW/(m·K), ≤0.8 mW/(m·K), ≤0.7 mW/(m·K), ≤0.6 mW/(m·K), ≤0.5 mW/(m·K), ≤0.4 mW/(m·K), or ≤0.3 mW/(m·K).

In some embodiments of the present disclosure, a method for preparing a core material for a vacuum insulation panel is provided, including the following steps:
(1) carding an aramid fiber through a carding machine to obtain a non-bonded fiber web; optionally, non-bonded fiber webs having different thicknesses may be selected and stacked according to a desired basis weight of the non-bonded fiber web; and
(2) subjecting the fiber web to a needle punching process or a hydroentangling process to obtain a fiber nonwoven fabric, and stacking the fiber nonwoven fabrics to obtain the core material for a vacuum insulation panel, where the obtained core material may be cut into a desired shape and size.

For purposes of illustration and not limitation, step (1) belongs to a carding method, in which aramid fiber bundles of specific specifications used in the present disclosure are further opened and mixed uniformly by the carding machine. Through the interaction between card clothing on paired rollers, the fibers are carded into interlaced single fibers, which then form a uniform fiber web utilizing the intrinsic crimp and friction of the fibers themselves. The fiber web has low strength and can serve as a layer for the core material for a vacuum insulation panel.

For purposes of illustration and not limitation, the needle punching process in step (2) belongs to a needle punching method. The aramid fibers of specific specifications used in the present disclosure are crimped staple fibers, which are carded by the carding machine to form a uniform fiber web. The web is cross-lapped to reach a target basis weight and then needle-punched by a needle loom. The needles of the needle loom have barbs, which repeatedly pierce the fiber web to hook and carry fibers to consolidate the web, forming a needle-punched nonwoven fabric. The nonwoven fabric has no warp and weft yarns; instead, the fibers are randomly oriented, resulting in substantially similar properties in both longitudinal and transverse directions.

For purposes of illustration and not limitation, the hydroentangling process in step (2) belongs to a hydroentangling method. The aramid fibers of specific specifications used in the present disclosure are crimped staple fibers, which are carded by the carding machine to form a uniform fiber web. The web is cross-lapped to reach a target basis weight and then subjected to subjected to hydroentangling by a hydroentangling machine. The hydroentangling nonwoven process generates a hydraulic action through the continuous jetting of high-pressure water streams, causing the arranged fibers to surge, displace, and rearrange, and to entangle with one another, thereby consolidating the fiber web and imparting certain physical and mechanical properties thereto.

In step (2), the needle punching percentage or the hydroentangling percentage may be appropriately reduced to balance between strength and the needle punching percentage or hydroentangling percentage. The needle punching percentage is 10% to 80%, such as 15% to 65%, for example 20% to 50%. The hydroentangling percentage is 10% to 80%, such as 15% to 65%, for example 20% to 50%.

Alternatively, in some embodiments of the present disclosure, a method for preparing a core material for a vacuum insulation panel is further provided, including the following steps:
(1) carding an aramid fiber and a bonding fiber through a carding machine to obtain a non-bonded fiber web; optionally, non-bonded fiber webs having different thicknesses may be selected and stacked according to a desired basis weight of the non-bonded fiber web; and
(2) subjecting the fiber web to a hot-pressing process to obtain a fiber nonwoven fabric, and stacking fiber nonwoven fabrics to obtain the core material for a vacuum insulation panel, where the obtained core material may be cut into a desired shape and size.

For purposes of illustration and not limitation, the hot-pressing process in step (2) belongs to a hot-pressing method. The aramid fibers of specific specifications used in the present disclosure are crimped staple fibers, which are premixed with low-melting-point bonding fibers (such as polypropylene fibers or polyester fibers) in a ratio through a coarse opening process, and then subjected to a fine opening process for further opening and mixing. Subsequently, the fibers are carded by a carding machine to form a uniform fiber web. The fiber web is then cross-lapped to reach a target basis weight, and subjected to hot pressing and calendering to melt the low-melting-point fibers, followed by cooling to form a nonwoven fabric having strength.

In some embodiments of the present disclosure, the bonding fiber includes at least one of a monocomponent polyester fiber, a monocomponent polyethylene fiber, a monocomponent polyvinyl alcohol fiber, a monocomponent polypropylene fiber, a bicomponent sheath-core structure polyester fiber, a bicomponent sheath-core structure polyethylene fiber, a bicomponent polyethylene-polyester fiber, and a bicomponent polypropylene-polyester fiber. For purposes of illustration and not limitation, the term "bicomponent" as used herein refers to a sheath-core structure in which the sheath and core are different components. For example, both the sheath and core are polyester but with different melting points, and are therefore referred to as bicomponent. As an example, in a bicomponent polyethylene-polyester fiber, the sheath is polyethylene and the core is polyester fiber. As an example, in a bicomponent polypropylene-polyester fiber, the sheath is polypropylene and the core is polyester fiber. As an example, in a bicomponent sheath-core polyester fiber, the sheath and the core are both polyester fibers with different melting points. For example, the melting point of the sheath may be 100 °C to 180 °C, such as 130 °C to 170 °C, for example 100 °C, 120 °C, 150 °C, or 180 °C, and the melting point of the core component is 240 °C to 280 °C, for example 260 °C.

In some embodiments of the present disclosure, a mass ratio of the aramid fiber to the bonding fiber is ≥ 5:1, for example ≥ 5:1, ≥ 5.5:1, ≥ 6:1, ≥ 6.5:1, ≥ 7:1, ≥ 7.5:1, ≥ 8:1, ≥ 8.5:1, ≥ 9:1, ≥ 9.5:1, ≥ 10:1, ≥ 10.5:1, ≥ 11:1, ≥ 12:1, ≥ 13:1, ≥ 14:1, or ≥ 15:1.

In some embodiments of the present disclosure, the obtained core material for a vacuum insulation panel may also be cut to a desired shape and size.

The present disclosure further provides a core material for a vacuum insulation panel prepared according to the method for preparing a core material for a vacuum insulation panel.

In some embodiments of the present disclosure, a method for preparing a vacuum insulation panel is provided, including the following steps:
(1) carding an aramid fiber through a carding machine to obtain a non-bonded fiber web;
   optionally, non-bonded fiber webs having different thicknesses may be selected and stacked according to a desired basis weight of the non-bonded fiber web;
(2) subjecting the fiber web to a needle punching process or a hydroentangling process to obtain a fiber nonwoven fabric, and stacking the fiber nonwoven fabrics to obtain a core material for a vacuum insulation panel, where the obtained core material may be cut into a desired shape and size; and
(3) subjecting the core material to heat treatment, then encapsulating it with a barrier film, followed by evacuation to obtain the vacuum insulation panel. Specifically, the core material may be placed in a bag formed from the barrier film. A vacuum heat sealer may be used to encapsulate and evacuate the bag, and then seal the bag after an internal pressure of the bag reaches a target pressure.

For purposes of illustration and not limitation, step (1) belongs to a carding method, in which aramid fiber bundles of specific specifications used in the present disclosure are further opened and mixed uniformly by the carding machine. Through the interaction between card clothing on paired rollers, the fibers are carded into interlaced single fibers, which then form a uniform fiber web utilizing the intrinsic crimp and friction of the fibers themselves. The fiber web has low strength and can serve as a layer for the core material for a vacuum insulation panel.

For purposes of illustration and not limitation, and in combination with the fourth aspect of the present disclosure, the needle punching process in step (2) belongs to a needle punching method. The aramid fibers of specific specifications used in the present disclosure are crimped staple fibers, which are carded by the carding machine to form a uniform fiber web. The web is cross-lapped to reach a target basis weight and then needle-punched by a needle loom. The needles of the needle loom have barbs, which repeatedly pierce the fiber web to hook and carry fibers to consolidate the web, forming a needle-punched nonwoven fabric. The nonwoven fabric has no warp and weft yarns; instead, the fibers are randomly oriented, resulting in substantially similar properties in both longitudinal and transverse directions.

For purposes of illustration and not limitation, the hydroentangling process in step (2) belongs to a hydroentangling method. The aramid fibers of specific specifications used in the present disclosure are crimped staple fibers, which are carded by the carding machine to form a uniform fiber web. The web is cross-lapped to reach a target basis weight and then subjected to subjected to hydroentangling by a hydroentangling machine. The hydroentangling nonwoven process generates a hydraulic action through the continuous jetting of high-pressure water streams, causing the arranged fibers to surge, displace, and rearrange, and to entangle with one another, thereby consolidating the fiber web and imparting certain physical and mechanical properties thereto.

The needle punching percentage or the hydroentangling percentage in step (2) may be appropriately reduced to balance between strength and the needle punching percentage or hydroentangling percentage. The needle punching percentage is 10% to 80%, such as 15% to 65%, for example 20% to 50%. The hydroentangling percentage is 10% to 80%, such as 15% to 65%, for example 20% to 50%. For purposes of illustration and not limitation, the needle punching percentage refers to the adjustment of the number of needle punches (the number of needles and a punching frequency) per unit area of the nonwoven fabric. It can be understood that, for a machine that would normally punch 100 needles in a given area, the needle punching percentage can be adjusted by modifying the punching frequency and an advancing speed of the nonwoven fabric to achieve, for example, only 40 punches in the same area.

Needle punching or hydroentangling refers to the process in which a fiber from an upper layer of the nonwoven fabric is pierced through the entire thickness of the fabric or approximately half of the thickness, thereby enhancing the strength of the nonwoven fabric through fiber entanglement.

Alternatively, in some embodiments of the present disclosure, a method for preparing a vacuum insulation panel is further provided, including the following steps:
(1) carding an aramid fiber and a bonding fiber through a carding machine to obtain a non-bonded fiber web; optionally, non-bonded fiber webs having different thicknesses may be selected and stacked according to a desired basis weight of the non-bonded fiber web; and
(2) subjecting the fiber web to a hot-pressing process to obtain a fiber nonwoven fabric, and stacking fiber nonwoven fabrics to obtain a core material for a vacuum insulation panel, where the obtained core material may be cut into a desired shape and size; and
(3) subjecting the core material to heat treatment, then encapsulating it with a barrier film, followed by evacuation to obtain the vacuum insulation panel. Specifically, the core material may be placed in a bag formed from the barrier film. A vacuum heat sealer may be used to encapsulate and evacuate the bag, and then seal the bag after an internal pressure of the bag reaches a target pressure.

For purposes of illustration and not limitation, the hot-pressing process in step (2) belongs to a hot-pressing method. The aramid fibers of specific specifications used in the present disclosure are crimped staple fibers, which are premixed with low-melting-point bonding fibers (such as polypropylene fibers or polyester fibers) in a ratio through a coarse opening process, and then subjected to a fine opening process for further opening and mixing. Subsequently, the fibers are carded by a carding machine to form a uniform fiber web. The fiber web is then cross-lapped to reach a target basis weight, and subjected to hot pressing and calendering to melt the low-melting-point fibers, followed by cooling to form a nonwoven fabric having strength.

In some embodiments of the present disclosure, the bonding fiber includes at least one of a monocomponent polyester fiber, a monocomponent polyethylene fiber, a monocomponent polyvinyl alcohol fiber, a monocomponent polypropylene fiber, a bicomponent sheath-core structure polyester fiber, a bicomponent sheath-core structure polyethylene fiber, a bicomponent polyethylene-polyester fiber, and a bicomponent polypropylene-polyester fiber. For purposes of illustration and not limitation, the term "bicomponent" as used herein refers to a sheath-core structure in which the sheath and core are different components. For example, both the sheath and core are polyester but with different melting points, and are therefore referred to as bicomponent. As an example, in a bicomponent polyethylene-polyester fiber, the sheath is polyethylene and the core is polyester fiber. As an example, in a bicomponent polypropylene-polyester fiber, the sheath is polypropylene and the core is polyester fiber. As an example, in a bicomponent sheath-core polyester fiber, the sheath and the core are both polyester fibers with different melting points. For example, the melting point of the sheath may be 100 °C to 180 °C, such as 130 °C to 170 °C, for example 100 °C, 120 °C, 150 °C, or 180 °C, and the melting point of the core component is 240 °C to 280 °C, for example 260 °C.

In some embodiments of the present disclosure, a mass ratio of the aramid fiber to the bonding fiber is ≥ 5:1, for example ≥ 5:1, ≥ 5.5:1, ≥ 6:1, ≥ 6.5:1, ≥ 7:1, ≥ 7.5:1, ≥ 8:1, ≥ 8.5:1, ≥ 9:1, ≥ 9.5:1, ≥ 10:1, ≥ 10.5:1, ≥ 11:1, ≥ 12:1, ≥ 13:1, ≥ 14:1, or ≥ 15:1.

For the description of the temperature and time of the thermal treatment, reference may be made to the description of the previous embodiments, which will not be repeated here.

The present disclosure further provides a vacuum insulation panel prepared by the method for preparing a vacuum insulation panel.

Some embodiments of the present disclosure provide a thermal insulation device, including the above-described core material for a vacuum insulation panel or the above-described vacuum insulation panel.

In some embodiments of the present disclosure, the thermal insulation device is a refrigerator. When the above-described core material for a vacuum insulation panel or the above-described vacuum insulation panel is used in a thermal insulation component of the refrigerator, a thermal insulation effect can be achieved.

In some embodiments of the present disclosure, the thermal insulation device is an insulated box. When the above-described core material for a vacuum insulation panel or the above-described vacuum insulation panel is used in a thermal insulation component of the insulated box, a thermal insulation effect can be achieved.

In some embodiments of the present disclosure, the thermal insulation device is a water heater. When the above-described core material for a vacuum insulation panel or the above-described vacuum insulation panel is used in a thermal insulation component of the water heater, a thermal insulation effect can be achieved.

In some embodiments of the present disclosure, the thermal insulation device is a microwave oven. When the above-described core material for a vacuum insulation panel or the above-described vacuum insulation panel is used in a thermal insulation component of the microwave oven, a thermal insulation effect can be achieved.

In some embodiments of the present disclosure, the thermal insulation device is a shipping container. When the above-described core material for a vacuum insulation panel or the above-described vacuum insulation panel is used in a thermal insulation component of the shipping container (such as a refrigerated container or a cold chain transport container), a thermal insulation effect can be achieved.

In some embodiments of the present disclosure, the thermal insulation device is a building wall panel. When the above-described core material for a vacuum insulation panel or the above-described vacuum insulation panel is used in a thermal insulation component of the building wall panel (such as a residential building or residential wall), a thermal insulation effect can be achieved.

In some embodiments of the present disclosure, the thermal insulation device is a cold storage facility. When the above-described core material for a vacuum insulation panel or the above-described vacuum insulation panel is used in a thermal insulation component of the cold storage facility, a thermal insulation effect can be achieved.

It can be understood that the vacuum insulation panel according to embodiments of the present disclosure uses the aramid fiber of specific specifications, having high porosity, excellent thermal conductivity, and light weight, thereby providing excellent thermal insulation performance. In the process of preparing the vacuum insulation panel according to the present disclosure, as well as in the cutting and production processes of the core material for a vacuum insulation panel, no dust or fine fibers are generated, presenting no environmental pollution or health risks.

The technical schemes of the present disclosure will also be better understood below in conjunction with specific examples.

### Example 7

A core material for a vacuum insulation panel and a vacuum insulation panel were prepared in this Example.

A specific preparation method was as follows:
(1) poly (m-phenylene isophthalamide) fiber having a linear density of 2.0 dtex and a length of 51 mm was carded using a carding machine at a worker roll-to-cylinder speed ratio of 1:25 to obtain a uniform double-layered thin fiber web of about 16 g/m², and the thin fiber web was cross-lapped three times to obtain a laminate of 45-60 g/m²;
(2) the laminate was placed in a needle loom for pre-needling and then main needling to obtain an aramid fiber nonwoven fabric having a needle punching percentage of 40% and a basis weight of 49.3 g/m², and the nonwoven fabrics were stacked to obtain the core material for a vacuum insulation panel; and
(3) the core material was cut to a target size and formed with a groove for accommodating a getter and a desiccant, then the core material was placed in an oven at 210 °C for 3 h, after that the core material was removed from the oven, and the getter (1 g) and the desiccant (4 g) were placed in the groove, subsequently, the core material was placed in a bag formed from a barrier film, and the bag was placed in a vacuum sealer to be evacuated and sealed to obtain a vacuum insulation panel having a thickness of 9.1 mm.

### Example 8

A core material for a vacuum insulation panel and a vacuum insulation panel were prepared in this Example.

A specific preparation method was as follows:
(1) poly (m-phenylene isophthalamide) fiber having a linear density of 2.0 dtex and a length of 38 mm was carded using a carding machine at a worker roll-to-cylinder speed ratio of 1:25 to obtain a uniform double-layered thin fiber web of about 16 g/m², and the thin fiber web was cross-lapped three times to obtain a laminate of 45-60 g/m²;
(2) the laminate was placed in a needle loom for pre-needling and then main needling to obtain an aramid fiber nonwoven fabric having a needle punching percentage of 40% and a basis weight of 49.8 g/m², and the nonwoven fabrics were stacked to obtain the core material for a vacuum insulation panel; and
(3) the core material was cut to a target size and formed with a groove for accommodating a getter and a desiccant, then the core material was placed in an oven at 210 °C for 3 h, after that the core material was removed from the oven, and the getter (1 g) and the desiccant (4 g) were placed in the groove, subsequently, the core material was placed in a bag formed from a barrier film, and the bag was placed in a vacuum sealer to be evacuated and sealed to obtain a vacuum insulation panel having a thickness of 9.1 mm.

### Example 9

A core material for a vacuum insulation panel and a vacuum insulation panel were prepared in this Example.

A specific preparation method was as follows:
(1) poly (m-phenylene isophthalamide) fiber having a linear density of 2.0 dtex and a length of 76 mm was carded using a carding machine at a worker roll-to-cylinder speed ratio of 1:25 to obtain a uniform double-layered thin fiber web of about 16 g/m², and the thin fiber web was cross-lapped three times to obtain a laminate of 45-60 g/m²;
(2) the laminate was placed in a needle loom for pre-needling and then main needling to obtain an aramid fiber nonwoven fabric having a needle punching percentage of 40% and a basis weight of 48.5 g/m², and the nonwoven fabrics were stacked to obtain the core material for a vacuum insulation panel; and
(3) the core material was cut to a target size and formed with a groove for accommodating a getter and a desiccant, then the core material was placed in an oven at 210 °C for 3 h, after that the core material was removed from the oven, and the getter (1 g) and the desiccant (4 g) were placed in the groove, subsequently, the core material was placed in a bag formed from a barrier film, and the bag was placed in a vacuum sealer to be evacuated and sealed to obtain a vacuum insulation panel having a thickness of 9.1 mm.

### Example 10

A core material for a vacuum insulation panel and a vacuum insulation panel were prepared in this Example.

A specific preparation method was as follows:
(1) poly (m-phenylene isophthalamide) fiber having a linear density of 2.0 dtex and a length of 51 mm was carded using a carding machine at a worker roll-to-cylinder speed ratio of 1:25 to obtain a uniform double-layered thin fiber web of about 16 g/m², and the thin fiber web was cross-lapped three times to obtain a laminate of 45-60 g/m²;
(2) the laminate was placed in a hydroentangling machine and passed sequentially through seven hydroentangling heads, with jet pressures of 10-15 kg/cm², 20-30 kg/cm², 35-40 kg/cm², 40-45 kg/cm², 30-35 kg/cm², 70-80 kg/cm², and 40-45 kg/cm², respectively, then a resulting wet nonwoven fabric after hydroentangling was dried in two steps: a first step of cylinder drying for surface drying of the hydroentangled nonwoven fabric, with a drying temperature gradually increasing from 100-120 °C, and a second step of box-type through-air drying at a temperature of 140-150 °C, thereby obtaining an aramid fiber nonwoven fabric having a basis weight of 49.5 g/m², and the nonwoven fabrics were stacked to obtain the core material for a vacuum insulation panel; and
(3) the core material was cut to a target size and formed with a groove for accommodating a getter and a desiccant, then the core material was placed in an oven at 210 °C for 3 h, after that the core material was removed from the oven, and the getter (1 g) and the desiccant (4 g) were placed in the groove, subsequently, the core material was placed in a bag formed from a barrier film, and the bag was placed in a vacuum sealer to be evacuated and sealed to obtain a vacuum insulation panel having a thickness of 9.0 mm.

### Example 11

A core material for a vacuum insulation panel and a vacuum insulation panel were prepared in this Example.

A specific preparation method was as follows:
(1) poly (m-phenylene isophthalamide) fiber having a linear density of 2.5 dtex and a length of 38 mm was carded using a carding machine at a worker roll-to-cylinder speed ratio of 1:25 to obtain a uniform double-layered thin fiber web of about 16 g/m², and the thin fiber web was cross-lapped three times to obtain a laminate of 45-60 g/m²;
(2) the laminate was placed in a needle loom for pre-needling and then main needling to obtain an aramid fiber nonwoven fabric having a needle punching percentage of 40% and a basis weight of 49.3 g/m², and the nonwoven fabrics were stacked to obtain the core material for a vacuum insulation panel; and
(3) the core material was cut to a target size and formed with a groove for accommodating a getter and a desiccant, then the core material was placed in an oven at 210 °C for 3 h, after that the core material was removed from the oven, and the getter (1.5 g) and the desiccant (5 g) were placed in the groove, subsequently, the core material was placed in a bag formed from a barrier film, and the bag was placed in a vacuum sealer to be evacuated and sealed to obtain a vacuum insulation panel having a thickness of 9.0 mm.

### Example 12

A core material for a vacuum insulation panel and a vacuum insulation panel were prepared in this Example.

A specific preparation method was as follows:
(1) poly (m-phenylene isophthalamide) fiber having a linear density of 1.5 dtex and a length of 76 mm was carded using a carding machine at a worker roll-to-cylinder speed ratio of 1:25 to obtain a uniform double-layered thin fiber web of about 16 g/m², and the thin fiber web was cross-lapped three times to obtain a laminate of 45-60 g/m²;
(2) the laminate was placed in a needle loom for pre-needling and then main needling to obtain an aramid fiber nonwoven fabric having a needle punching percentage of 40% and a basis weight of 49.5 g/m², and the nonwoven fabrics were stacked to obtain the core material for a vacuum insulation panel; and
(3) the core material was cut to a target size and formed with a groove for accommodating a getter and a desiccant, then the core material was placed in an oven at 210 °C for 3 h, after that the core material was removed from the oven, and the getter (1.5 g) and the desiccant (6 g) were placed in the groove, subsequently, the core material was placed in a bag formed from a barrier film, and the bag was placed in a vacuum sealer to be evacuated and sealed to obtain a vacuum insulation panel having a thickness of 9.0 mm.

### Comparative Example 3

A commercially available glass fiber web was used to prepare a glass fiber core material for a vacuum insulation panel with a thickness of 9 mm in this Comparative Example.

### Comparative Example 4

The poly (m-phenylene isophthalamide) fiber with a length of 18 mm was used in this Comparative Example, and the rest of the process was the same as Example 7.

### Comparative Example 5

The poly (m-phenylene isophthalamide) fiber with a length of 270 mm was used in this Comparative Example, and the rest of the process was the same as Example 7.

The performances of the products prepared in the Examples and Comparative Examples are shown in Table 2 below.

**Table 2**

| | Comparative Example 3 | Comparative Example 4 | Comparative Example 5 | Example 7 | Example 8 | Example 9 | Example 10 | Example 11 | Example 12 |
|---|---|---|---|---|---|---|---|---|---|
| Length of fiber, mm | 25 | 18 | 270 | 51 | 38 | 76 | 51 | 38 | 76 |
| Density of core material, g/cm³ | 320 | / | 235 | 235 | 235 | 235 | 235 | 235 | 235 |
| Porosity | 90 | / | 84.4 | 84.6 | 84.5 | 84.4 | 84.5 | 84.2 | 84.4 |
| Basis weight of nonwoven fabric, g/m² | / | / | 49.73 | 49.3 | 49.8 | 48.5 | 49.5 | 49.3 | 49.5 |
| Thickness of vacuum insulation panel, mm | 9.0 | / | 8.9 | 9.1 | 9.1 | 9.1 | 9.0 | 9.0 | 9.0 |
| Thermal conductivity of vacuum insulation panel, mW/(m·K) | 1.46 | / | 1.70 | 1.34 | 1.32 | 1.37 | 1.33 | 1.4 | 1.38 |
| Strength of carded fiber web | / | The strength of the fiber web is very poor, and a uniform fiber web cannot be made by carding | Very high | Relatively high | Average | Relatively high | Relatively high | Average | Relatively high |

The thermal conductivity was measured using a steady-state heat flux method according to the national standard GB/T 10294/10295. The strength of the carded fiber web was evaluated based on the actual operational performance.

It can be seen from Table 2 that the vacuum insulation panels prepared in the present disclosure exhibits superior thermal conductivity. Under the same conditions, the thermal conductivity of the vacuum insulation panel prepared using glass fiber in Comparative Example 3 is significantly inferior to that of the present disclosure.

The poly (m-phenylene isophthalamide) fiber used in Comparative Example 4 are too short, resulting in poor inter-fiber bonding during carding, which in turn leads to poor strength and uniformity of the carded fiber web, making effective production impossible and rendering it unsuitable for the dry process of the present disclosure.

The poly (m-phenylene isophthalamide) fiber used in Comparative Example 5 is too long, resulting in an increase in thermal conductivity.

Although the present disclosure has been described in detail above with reference to the embodiments, the present disclosure is not limited thereto. Various variations can be made within the scope of knowledge possessed by those having ordinary skills in the art without departing from the protection scope of the present disclosure.

### Industrial Applicability

The vacuum insulation panels according to the embodiments of the present disclosure exhibit favorable thermal insulation performance. They can be widely applied in various thermal insulation fields, including refrigerators, residential buildings, cold storage facilities, thermal insulation boxes, water heaters, and microwave ovens, possessing industrial applicability.

## Claims

1. A core material for a vacuum insulation panel, comprising an aramid fiber and a bonding material, wherein the aramid fiber comprises at least one of a poly (m-phenylene isophthalamide) fiber, a poly (p-phenylene terephthalamide) fiber, and a heterocyclic aramid fiber; and the aramid fiber has a length of 1 mm to 10 mm.

2. The core material for a vacuum insulation panel of claim 1, wherein the aramid fiber has a linear density of 0.2 dtex to 5 dtex.

3. The core material for a vacuum insulation panel of claim 1 or 2, wherein the core material has a density of 100 g/cm³ to 300 g/cm³.

4. The core material for a vacuum insulation panel of any one of claims 1 to 3, wherein the core material has a porosity of 60% to 95%.

5. The core material for a vacuum insulation panel of any one of claims 1 to 4, wherein the bonding material comprises at least one of a bonding fiber and a binder.

6. The core material for a vacuum insulation panel of claim 5, wherein the bonding fiber comprises at least one of a monocomponent polyester fiber, a monocomponent polyethylene fiber, a monocomponent polyvinyl alcohol fiber, a monocomponent polypropylene fiber, a bicomponent sheath-core structure polyester fiber, a bicomponent sheath-core structure polyethylene fiber, a bicomponent polyethylene-polyester fiber, and a bicomponent polypropylene-polyester fiber.

7. The core material for a vacuum insulation panel of claim 5 or 6, wherein the binder comprises at least one of polyacrylate, polyurethane, epoxy resin, and starch hydrogel.

8. The core material for a vacuum insulation panel of any one of claims 1 to 7, wherein based on a mass of the aramid fiber, a mass fraction of the bonding material is ≤35%.

9. A vacuum insulation panel, comprising the core material for a vacuum insulation panel of any one of claims 1 to 8 and a barrier film, wherein the barrier film encapsulates the core material for a vacuum insulation panel.

10. The vacuum insulation panel of claim 9, further comprising at least one of a desiccant and a getter, wherein the barrier film encapsulates the core material for a vacuum insulation panel and the at least one of the desiccant and the getter.

11. The vacuum insulation panel of claim 10, wherein the desiccant comprises at least one of calcium carbonate, calcium sulfate, calcium oxide, calcium chloride, magnesium chloride, and barium oxide.

12. The vacuum insulation panel of claim 10 or 11, wherein the getter comprises at least one of a barium-lithium alloy, a palladium oxide, and an activated carbon.

13. The vacuum insulation panel of any one of claims 9 to 12, wherein the vacuum insulation panel has a thickness of at least 8 mm.

14. The vacuum insulation panel of any one of claims 9 to 13, wherein the vacuum insulation panel has an internal pressure of 1×10⁻⁴ Pa to 1×10⁻³ Pa.

15. A method for preparing the core material for a vacuum insulation panel of any one of claims 1 to 8, comprising the following steps:
(1) dispersing an aramid fiber and a bonding material in water to obtain a fiber dispersion;
and
(2) subjecting the fiber dispersion to wet process treatment, followed by drying to obtain the core material for a vacuum insulation panel.

16. A method for preparing the core material for a vacuum insulation panel of any one of claims 1 to 8, comprising the following steps:
(1) dispersing an aramid fiber in water to obtain a fiber dispersion; and
(2) subjecting the fiber dispersion to wet process treatment, then applying a binder material, followed by drying to obtain the core material for a vacuum insulation panel.

17. A core material for a vacuum insulation panel, comprising a fiber nonwoven fabric made of the aramid fiber, wherein the aramid fiber comprises at least one of a poly (m-phenylene isophthalamide) fiber, a poly (p-phenylene terephthalamide) fiber, and a heterocyclic aramid fiber, and the aramid fiber has a length of 25 mm to 250 mm.

18. The core material for a vacuum insulation panel of claim 17, wherein the aramid fiber has a linear density of 0.5 dtex to 5 dtex.

19. The core material for a vacuum insulation panel of claim 17 or 18, wherein the core material has a density of 100 g/cm³ to 300 g/cm³.

20. The core material for a vacuum insulation panel of any one of claims 17 to 19, wherein the fiber nonwoven fabric has a basis weight of 10 g/m² to 150 g/m².

21. A vacuum insulation panel, comprising the core material for a vacuum insulation panel of any one of claims 17 to 20 and a barrier film, wherein the barrier film encapsulates the core material for a vacuum insulation panel.

22. A method for preparing the core material for a vacuum insulation panel of any one of claims 17 to 20, comprising the following steps:
(1) carding an aramid fiber through a carding machine to obtain a fiber web; and
(2) subjecting the fiber web to a needle punching process or a hydroentangling process to obtain a fiber nonwoven fabric, and stacking the fiber nonwoven fabrics to obtain the core material for a vacuum insulation panel.

23. A method for preparing the core material for a vacuum insulation panel of any one of claims 17 to 20, comprising the following steps:
(1) carding an aramid fiber and a bonding fiber through a carding machine to obtain a fiber web; and
(2) subjecting the fiber web to a hot-pressing process to obtain a fiber nonwoven fabric, and stacking the fiber nonwoven fabrics to obtain the core material for a vacuum insulation panel.

24. The method of claim 23, wherein the bonding fiber comprises at least one of a monocomponent polyester fiber, a monocomponent polyethylene fiber, a monocomponent polyvinyl alcohol fiber, a monocomponent polypropylene fiber, a bicomponent sheath-core structure polyester fiber, a bicomponent sheath-core structure polyethylene fiber, a bicomponent polyethylene-polyester fiber, and a bicomponent polypropylene-polyester fiber.

25. The method of claim 23 or 24, wherein a mass ratio of the aramid fiber to the bonding fiber is ≥5:1.

26. A method for preparing the vacuum insulation panel of any one of claims 9 to 14 and 21, comprising the following steps:
subjecting the core material for a vacuum insulation panel to heat treatment, encapsulating the core material with a barrier film, followed by evacuation to obtain the vacuum insulation panel.

27. The method of claim 26, wherein the heat treatment is carried out at a temperature of 90 °C to 300 °C.

28. The method of claim 26 or 27, wherein the heat treatment is carried out for 1 h to 36 h.

29. The method of any one of claims 26 to 28, wherein the core material for a vacuum insulation panel is prepared using the method of any one of claims 15, 16, 22, and 23.

30. A thermal insulation device, comprising the core material for a vacuum insulation panel of any one of claims 1 to 8 or any one of claims 17 to 20, or the vacuum insulation panel of any one of claims 9 to 14 or claim 21; and the thermal insulation device comprises a refrigerator, an insulated box, a water heater, a microwave oven, a container, and a building wall panel.
